(19) Europäisches Patentamt
European Patent Office
Office européen des brevets

(11) **EP 1 967 792 B1**

(12) **EUROPÄISCHE PATENTSCHRIFT**

(45) Veröffentlichungstag und Bekanntmachung des Hinweises auf die Patenterteilung:
**17.12.2014 Patentblatt 2014/51**

(51) Int Cl.:
***F23G 5/50*** *(2006.01)*

(21) Anmeldenummer: **07004214.8**

(22) Anmeldetag: **01.03.2007**

(54) **Regelkreis zur Regelung eines Verbrennungsprozesses**

Control cycle for controlling a combustion process

Circuit régulateur pour réguler un processus de combustion

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**10.09.2008 Patentblatt 2008/37**

(73) Patentinhaber: **STEAG Powitec GmbH**
**45219 Essen (DE)**

(72) Erfinder:
• **Wintrich, Franz**
**45309 Essen (DE)**
• **Stephan, Volker**
**99976 Hüpstedt (DE)**

(74) Vertreter: **Patentanwälte**
**Hosenthien-Held und Dr. Held**
**Klopstockstrasse 63-65**
**70193 Stuttgart (DE)**

(56) Entgegenhaltungen:
**EP-A1- 1 396 770      WO-A-98/27474**
**WO-A-2004/018940      US-A1- 2002 016 640**

**Beschreibung**

Die Erfindung betrifft einen Regelkreis zur Regelung eines Verbrennungsprozesses mit den Merkmalen des Oberbegriffs des Anspruches 1. Ein derartiger Regelkreis ist aus WO 2004/018940 bekannt.

Bei einem bekannten Regelkreis dieser Art wird im Rechner ein Prozessmodell hinsichtlich seiner Struktur fest vorgegeben, wobei die Struktur nur in Ausnahmefällen durch einen menschlichen Eingriff gezielt geändert wird. Es besteht damit sowohl die Gefahr, dass informative Eingangsdaten nicht berücksichtigt werden, als auch dass Rechnerleistung für nicht informative Eingangsdaten verbraucht wird.

Der Einsatz eines menschlichen Experten zum Auffinden einer geeigneteren Struktur ist fehleranfällig und sehr aufwendig. Datengetriebene Kompressionsansätze, beispielsweise die PCA, verringern letztendlich nicht die Datenmenge, sondern stellen sie nur anders dar, so dass keine neue Struktur entsteht.

Der vorliegenden Erfindung liegt die Aufgabe zugrunde, einen Regelkreis der eingangs genannten Art zu schaffen, der automatisch Verbesserungen der Regelung entwickelt. Diese Aufgabe wird durch einen Regelkreis mit den Merkmalen des Anspruches 1 gelöst. Weitere vorteilhafte Ausgestaltungen sind Gegenstand der Unteransprüche.

Das -Merkmalsextraktormodul extrahiert aus den Eingangsdaten Merkmale, die für die Zielwerte informativ sind, so dass mit einem darauf aufbauenden alternativen Prozessmodell, insbesondere eines neuronalen Netzes, mit möglichst einfacher Struktur, insbesondere geringerer Dimension, schnellere und genauere Vorhersagen künftiger Zustände getroffen werden können, und damit die Regelung schneller und zielgerichteter erfolgen kann. Das Merkmals-extraktormodul sucht hierzu unter Berücksichtigung der Zielwerte einen Filter, mittels welchem die für das Prozessmodell zu berücksichtigenden Eingangsdaten verringert werden, um nur noch die informativsten Merkmale weiter zu verwenden. Dies spart Rechenleistung. Im Wettbewerb mehrerer Prozessmodellen wird vermieden, dass das neuronale Netz in einem lokalen Minimum verbleibt. Das zum Extrahieren verwendete Informationsmaß wird aus verschiedenen Einzel- und Verbundwahrscheinlichkeiten berechnen und aus sein Maximum untersucht. In analoger Weise können die effektivsten Stellgrößen ausgewählt werden, wobei die anlagenspezifischen Eigenschaften in einem solchen Modul berücksichtigt werden können, um das Modul, welches vorrangig das Prozessmodell anwendet, hinsichtlich der Rechnerkapazität zu entlasten.

Die Erfindung kann bei verschiedenen stationären thermodynamischen Anlagen, insbesondere Kraftwerken, Müllverbrennungsanlagen und Zementwerken, eingesetzt werden.

Im folgenden ist die Erfindung anhand eines in der Zeichnung dargestellten Ausführungsbeispiels näher erläutert. Es zeigen

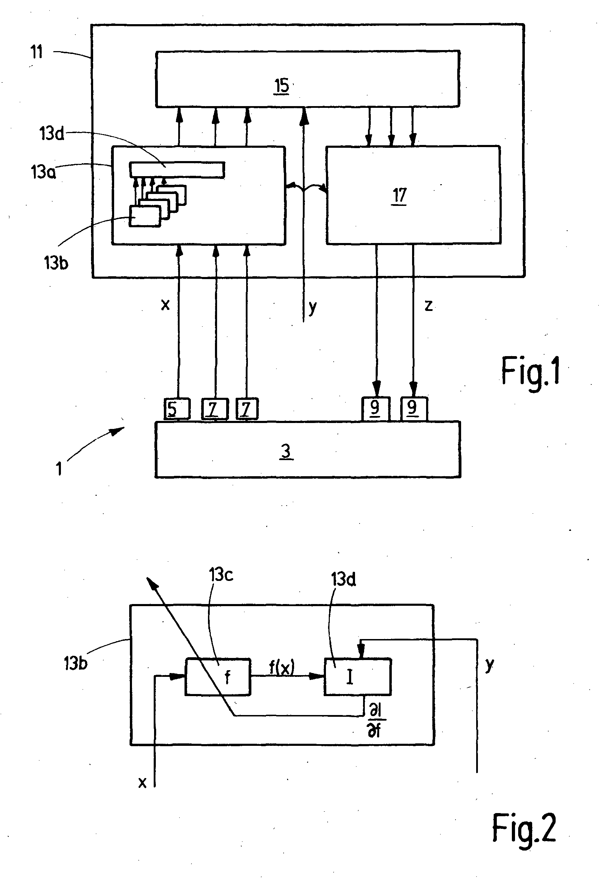

Fig. 1    ein Blockschaltbild der Anlage und des Rechners,
Fig. 2    ein Blockschaltbild eines Merkmalsextraktors von Fig. 1, und

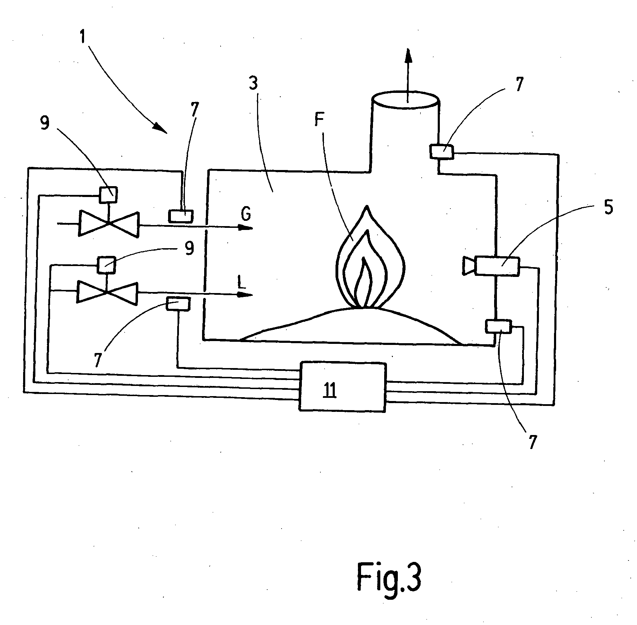

Fig. 3    eine Fig. 1 entsprechende, schematische Darstellung einer Anlage.

Eine Anlage 1, beispielsweise ein Kohle-, Öl- oder Gaskraftwerk, eine Müllverbrennungsanlage oder ein Zementwerk, umfasst einen Ofen 3, worunter auch ein Rost verstanden werden soll, wenigstens eine Beobachtungsvorrichtung 5, welche das Innere des Ofens 3 (bzw. den Rost) bildlich erfassen kann, vorzugsweise weitere Sensoren 7, wenigstens eine Stellvorrichtung 9, und einen Rechner 11, an welchen die Beobachtungsvorrichtung(en) 5, weiteren Sensoren 7 und Stellvorrichtung(en) 9 angeschlossen sind.

Dem Ofen 3 wird Brennstoff oder anderes umzusetzendes Material, kurz als Gut G bezeichnet, beispielsweise Kohle, Öl, Gas, Müll, Kalk oder dergleichen, sowie Primärluft (bzw. -sauerstoff) und Sekundärluft (bzw. -sauerstoff), kurz als Luft L bezeichnet, zugeführt, wobei diese Zufuhr durch die vom Rechner 11 ansteuerbaren Stellvorrichtungen 9 gesteuert wird. Im Ofen 3 findet ein Verbrennungsprozess statt. Der dadurch erzeugte Flammenkörper F (sowie gegebenenfalls Emissionen der Wände des Ofens 3) wird von den Beobachtungsvorrichtungen 5 laufend erfasst. Die Beobachtungsvorrichtungen 5 umfassen jeweils neben einem die Wand des Ofens 3 durchdringenden optischen Zugang, wie beispielsweise einer Lanze oder einer in der EP 1 621 813 A1 offenbarten Vorrichtung, noch eine Kamera oder dergleichen, welche im optischen Bereich oder benachbarten Bereichen elektromagnetischer Wellen arbeitet. Bevorzugt ist eine zeitlich, örtlich und spektral hochauflösende Kamera, wie sie beispielsweise in der WO 02/070953 A1 beschrieben ist.

Die Bilder des Flammenkörpers F (und der eventuellen Emissionen der Wände des Ofens 3) werden im Rechner 11 ausgewertet, beispielsweise nach einem Eigenwert-Verfahren, das in der WO 2004/018940 A1 beschrieben ist. Die aus den Bildern des Flammenkörpers F gewonnenen Daten sowie die Daten der weiteren Sensoren 7, welche beispielsweise die Zufuhr des Gutes G und der Luft L, Schadstoffkonzentrationen in den Abgasen oder die Konzentration des Freikalks (FCAO) messen, werden als Zustandsvariablen s(t) behandelt, die (zeitabhängig) den Zustand des Systems in der Anlage 1 im allgemeinen und des Verbrennungsprozesses im besonderen beschreiben und als Vektor zu betrachten sind.

Durch den Ofen 3 als (Regel-)Strecke, die Beobachtungsvorrichtung(en) 5 und die weiteren Sensoren 7, den Rechner 11 und die Stellvorrichtungen 9 wird ein Regelkreis definiert. Es kann auch ein konventioneller Regelkreis nur mit Ofen 3, Sensoren 7, Rechner 11 und Stellvorrichtungen 9 und ohne die Beobachtungsvorrichtung(en) 5 vorgesehen sein, dessen Regelung nur wenige Zustandsvariablen $s_t$ berücksichtigt (d.h. niederdimensional ist) und dann durch die Einbeziehung der Beobachtungsvorrichtung(en) 5 optimiert wird. Das System in der Anlage 1 ist beispielsweise auf bestimmte Soll-Werte oder auf einen stabilen Prozess (d.h. einen ruhigen, quasi stationären Betrieb der Anlage 1) hin regelbar. In beiden Fällen werden der durch die Ist-Werte der Zustandsvariablen beschriebene Zustand bewertet und gegebenenfalls geeignete Stellaktionen (Stelleingriffe), kurz als Aktionen bezeichnet, ausgewählt, welche von den Stellvorrichtungen 9 auszuführen sind. Neben der Zufuhr von Gut G und Luft L können weitere Tätigkeiten von Stellvorrichtungen 9 und gegebenenfalls auch eine Probenentnahme eine Aktion in erfindungsgemäßen Sinne sein. Auch Störungen können als ungewollte Aktionen behandelt werden. Es sind einstellbare Kombinationen der beiden vorgenannten Regelungsfälle denkbar, die dann Kompromisse darstellen.

Die Bewertung des Zustandes und die Auswahl der geeigneten Aktionen kann beispielsweise gemäß einem Verfahren erfolgen, wie es in der WO 02/077527 A1 beschrieben ist. Im Rechner 11 ist wenigstens ein neuronales Netz implementiert, welches als ein Prozessmodell die Reaktionen der Zustände des Systems auf Aktionen speichert, also die (nichtlinearen) Verknüpfungen zwischen den Werten der Zustandsvariablen zu einem bestimmten Zeitpunkt und den dann getätigten Aktionen einerseits und den resultierenden Werten der Zustandsvariablen zu einem späteren (d.h. um ein bestimmtes Zeitintervall späteren) Zeitpunkt andererseits, und zwar zu möglichst vielen Zeitpunkten in der Vergangenheit. In diesem Sinne können auch Störungen als (ungewollte) Aktionen in das Prozessmodell einbezogen werden. Eine vom Prozessmodell, d.h. den gespeicherten Verknüpfungen unabhängige, Situationsbewertung, die in der Art einer vereinfachten Güte konzipiert ist, bewertet für einen bestimmten Zeitpunkt die Werte der Zustandsvariablen in Hinblick auf vorgegebene Optimierungsziele, d.h. wie nahe der Zustand des Systems zu diesem Zeitpunkt dem optimalen Zustand ist. Mit einer Bewertung eines - mit dem Prozessmodell in Abhängigkeit von einer bestimmten Aktion - vorhergesagten Zustandes zu einem zukünftigen Zeitpunkt lässt sich die Eignung der bestimmten Aktion zur Annäherung an das Optimierungsziel feststellen.

Zur Verbesserung der Genauigkeit werden nicht nur die Prozessmodelle durch die tatsächlichen Entwicklungen der Zustandsvariablen als Reaktion auf Aktionen laufend ergänzt, sondern es findet ein Wettbewerb mehrerer Prozessmodelle hinsichtlich der Qualität der Vorhersagen statt. Hierzu werden im Hintergrund alternative Prozessmodelle, beispielsweise mit anderen Topologien, erstellt und trainiert, deren Vorhersagen mit dem oder den aktuell verwendeten Prozessmodell(en) verglichen werden, um letztere gegebenenfalls zu ersetzen, wie es beispielsweise in der EP 1 396 770 A1 beschrieben ist.

Ein Prozessmodell, das in Echtzeit zu verwertbaren Vorhersagen kommen soll, berücksichtigt nicht sämtliche zur Verfügung stehenden Zustandsvariablen. Erfindungsgemäß werden die informationstragenden Merkmale aus dem vorhandenen Datenstrom der Eingangskanäle, d.h. der Beobachtungsvorrichtungen 5 und der weiteren Sensoren 7, extrahiert, um daraus ein anders strukturiertes Prozessmodell, d.h. ein alternatives Prozessmodell mit anderer Topologie des neuronalen Netzes, zu schaffen, welches sich auf die extrahierten, informationstragenden Merkmale und damit auf die relevantesten Zustandsvariablen stützt.

Der Rechner 11 ist so organisiert, dass die Rohdaten der Eingangskanäle, im folgenden kurz als Eingangsdaten x bezeichnet, zunächst in einen Merkmalsextraktormodul 13 des Rechners 11 eingegeben werden, welches online, d.h. in Echtzeit, die Eingangsdaten x gefiltert oder ungefiltert in einem Handlungsgeneratormodul 15 des Rechners 11 gibt. Im Handlungsgeneratormodul 15 sind das aktuelle Prozessmodell und gegebenenfalls die alternativen Prozessmodelle implementiert, welche im Hintergrund, wie zuvor erwähnt, bezüglich der Vorhersagen im Wettbewerb untereinander und mit dem aktuellen Prozessmodell stehen.

Das Handlungsgeneratormodul 15 bewertet den durch die ungefilterten oder gefilterten Eingangsdaten x beschriebenen Zustand des Systems anhand der Optimierungsziele und trifft mit dem aktuellen Prozessmodell Vorhersagen über den Zustand des System zu einem zukünftigen Zeitpunkt in Abhängigkeit von verschiedenen Aktionen. Zur Annäherung an das Optimierungsziel geeignete, zunächst noch allgemeine Aktionen werden an ein Stellgrößenauswahlmodul 17 des Rechners 11 abgegeben. Das Stellgrößenauswahlmodul 17 wählt die konkret vorzunehmenden Aktionen aus und gibt diese Auswahl von Werten von Stellgrößen als Ausgangsdaten z an die Stellvorrichtungen 9 ab. Die Stellvorrichtungen 9 nehmen aufgrund der empfangen Ausgangsdaten z die ausgewählten Aktionen vor. Der Rechner 11 mit den genannten Bestandteile 13, 15 und 17 braucht keine Einheit zu sein, sondern kann auch durch eine Aufgabenaufteilung auf miteinander vernetzte Einzelrechner verwirklicht sein.

Um die vorgenannten, informationstragenden Merkmale zu ermitteln, sind im Merkmalsextraktormodul 13 verschiedene Merkmalsextraktoren 13a enthalten, beispielsweise einer für jedes Optimierungsziel oder Zielwert y. Die Merkmalsextraktoren 13a arbeiten neben der normalen Regelung, d.h. vorzugsweise im Hintergrund oder offline. Jeder Merkmalsextraktor 13a nimmt die ungefilterten Eingangsdaten x, in der Regel ein Vektor, und filtert sie in einer Filtereinheit 13b mit einem Filter f. Das Filter f ist eine Linearkombination der verschiedenen Eingangsdaten x (zu einer bestimmten Zeit) mit speziell gewählten Koeffizienten, kann also einen Skalar, ein zweidimensionales Objekt (z.B. zeitabhängiges Spektrum) oder ein dreidimensionales Objekt (z.B. zeitabhängiges Bild) repräsentieren. Die gefilterten Eingangsdaten oder Merkmale f(x) werden zusammen mit einem Zielwert y, beispielsweise der Konzentration eines bestimmten Schadstoffes, einer Bewertereinheit 13c zugeführt, welche ein Informationsmaß I ermittelt.

Ein solches Informationsmaß I oder Entropie ist im einfachsten Fall eine "mutual information", welche sich aus den Einzelwahrscheinlichkeiten p(x) von Eingangsdaten x und p(y) des Zielwertes und der Verbundwahrscheinlichkeit p(x, y) ergibt als

$$I = p(x, y, f) \log_2 [ p(x, y, f) / (p(x, f) p(y)) ]$$

Die Bewertereinheit 13c sucht in Abhängigkeit des Filters f ein Maximum des Informationsmaßes, also $\partial I / \partial f = 0$, womit dann das Filter f, also vorzugsweise die Koeffizienten der Linearkombination, in der Filtereinheit 13b geändert wird. Iterativ wird dann das Filter f ermittelt, welches aus den Eingangsdaten x die informativen Merkmale f(x) für den gewählten Zielwert y extrahiert. Diese informativen Merkmale f(x) sind diejenigen, welche aus allen Eingangsdaten x möglichst viele Informationen zur Beschreibung der eigentlichen Optimierungsziele, nämlich der Zielwerte y, beitragen können. Im günstigsten Fall sind so viele Koeffizienten des Filters f Null oder vernachlässigbar, dass letztendlich nur wenige Eingangsdaten x berücksichtigt werden müssen.

Die Ergebnisse der einzelnen Merkmalsextraktoren 13a werden einem Merkmalsselektor 13d zugeführt, welcher für alle (gefilterten) Eingangsdaten $x_1$, $x_2$, ..., d.h. Merkmale, und Zielwerte y kombinierte Informationsmaße JMI ("joint mutual information") ermittelt, welche sich - analog zum einfachen Informationsmaß I - aus Einzelwahrscheinlichkeiten und Verbundwahrscheinlichkeiten ergeben als

$$JMI = p(x_1, x_2, ..., y) \log_2 [ p(x_1, x_2, ..., y) / (p(x_1, x_2, ...) p(y)) ]$$

Der Merkmalsselektor 13d sucht nun unter den verschiedenen kombinierten Informationsmaße JMI das Maximum heraus, d.h. diejenige Kombination der informativen Merkmale, welche den informativsten Merkmalssatz bildet. Redundante Merkmale werden dadurch unterdrückt und gefundene, informationstragende Kombinationen beibehalten. Diesem informativsten Merkmalssatz entspricht eine Kombination der einzelnen Filter f, also ein kombinierter Filter. Der Merkmalsselektor 13d arbeitet ebenfalls vorzugsweise im Hintergrund oder offline. In einem angenommenen Fall eines Kamerabildes als Eingangsdaten x, welches normalerweise nur in einem interessierenden Teilbereich ROI ausgewertet wird, und einer Vergrößerung oder Verlagerung der Flamme F vom Brenner weg kann das Merkmalsextraktormodul 13 beispielsweise ermitteln, dass das aufgefundene Filter f - in Abweichung vom ROI - schwerpunktsmäßig vom Brenner weiter weg gelegene Bereiche heranziehen, so dass eine Verlagerung des ROI empfehlenswert wäre.

Der vom selbstorganisiert und automatisch arbeitenden Merkmalsextraktormodul 13 aufgefundene informativste Merkmalssatz bzw. kombinierte Filter beinhaltet Strukturinformationen für das zu verwendende neuronale Netz, welche an das Handlungsgeneratormodul 15 gegeben werden. Das ebenfalls selbstorganisiert und automatisch arbeitenden Handlungsgeneratormodul 15 bildet daraus ein neues Prozessmodell. Im günstigsten Fall sind so viele Koeffizienten des kombinierten Filters Null oder vernachlässigbar, dass letztendlich nur wenige Eingangsdaten x berücksichtigt werden müssen. Das neue Prozessmodell wird trainiert und tritt in den Wettbewerb mit den anderen Prozessmodellen. Sobald das neue Prozessmodell aus diesem Wettbewerb heraus das aktuelle Prozessmodell ersetzt, wird die Rechnerleistung effizienter genutzt und damit der Regelkreis schneller und/oder genauer bedient.

Das Stellgrößenauswahlmodul 17 ist vorzugsweise so organisiert, dass es neben der normalen Regelung, also vorzugsweise im Hintergrund, nach den Kombinationen von Stellgrößen sucht, die einen möglichst starken und eindeutigen Einfluss auf die Zielwerte y haben. Hierzu werden - analog zum Merkmalsextraktormodul 13 - die möglichen Aktionen auf ihre Wirkung in Bezug auf die Zielwerte y geprüft, und zwar durch Bildung eines Informationsmaßes I bzw. bei Kombinationen einer JMI. Durch Suche nach den Maxima werden die effektivsten Stellgrößen ermittelt. Effektlose und mehrdeutige Stellgrößen werden eliminiert. Auch damit wird der Regelkreis schneller und/oder genauer bedient. Die konkreten Werte der effektivsten Stellgrößen bilden die Ausgangsdaten z, welche an die Stellvorrichtungen 9 zur Ansteuerung derselben abgegeben werden. Soweit die Anlage 1 ein Prozessleitsystem aufweist, welches dem Rechner 11 von den Sensoren 7 Eingangsdaten x liefert und Ausgangsdaten z für die Ansteuerung der Stellvorrichtungen 9 entgegennimmt, gibt das Stellgrößenauswahlmodul 17 die Ausgangsdaten z an besagtes Prozessleitsystem ab.

Das Stellgrößenauswahlmodul 17 muss aktiv betrieben werden, um die Wirkung der einzelnen Stellgrößen von Zeit zu Zeit zu überprüfen und gegebenenfalls zu aktualisieren. Das Stellgrößenauswahlmodul 17 entlastet das Handlungsgeneratormodul 15 dahingehend, dass es das anlagenspezifische Verhalten der Stellgrößen modelliert, und somit das Handlungsgeneratormodul 15 nur einfacher und allgemeiner gehaltene Aktionen vorgeben muss, also das Stellgrößenauswahlmodul 17 die konkrete Umsetzung vornimmt.

Die Aufgabe des selbstorganisiert und automatisch arbeitenden Handlungsgeneratormoduls 15 besteht dann darin, eine optimale Handlungsstrategie, welche die Ziele des Betreibers der Anlage 1 umsetzt, selbstorganisiert zu entwickeln. Komplexere Probleme können selbstorganisiert in einfachere Teilprobleme zerlegt werden.

**Bezugszeichenliste**

| | |
|---|---|
| 1 | Anlage |
| 3 | Ofen |
| 5 | Beobachtungsvorrichtung |
| 7 | Sensor |
| 9 | Stellvorrichtung |
| 11 | Rechner |
| 13 | Merkmalsextraktormodul |
| 13a | Merkmalsextraktor |
| 13b | Filtereinheit |
| 13c | Bewertereinheit |
| 13d | Merkmalsselektor |
| 15 | Handlungsgeneratormodul |
| 17 | Stellgrößenauswahlmodul |
| F | Flammenkörper |
| f | Filter |
| f(x) | gefilterter Eingangswert |
| G | Gut |
| I | Informationsmaß |
| JMI | kombiniertes Informationsmaß |
| L | Luft |
| x | Eingangsdaten |
| y | Zielwert |
| z | Ausgangsdaten |

**Patentansprüche**

1. Regelkreis zur Regelung eines Verbrennungsprozesses in einer Anlage (1), insbesondere einem Kraftwerk, einer Müllverbrennungsanlage oder einem Zementwerk, mit einer Strecke (3) zum Umsetzen von Gut (G) unter Zufuhr von Luft (L) mittels des Verbrennungsprozesses unter Ausbildung wenigstens eines Flammenkörpers (F), wenigstens einer den Flammenkörper (F) bildlich erfassenden Beobachtungsvorrichtung (5) und weiterer Sensoren (7) zur Ermittlung von Eingangsdaten (x), wenigstens einer durch Ausgangsdaten (z) ansteuerbaren Stellvorrichtung (9) für wenigstens die Zufuhr von Gut (G) und/oder Luft (L) und einem Rechner (11) zur Bewertung der Eingangsdaten (x) in Bezug auf Zielwerte (y) und zur Ermittlung der Ausgangsdaten (z) unter Verwendung eines aktuellen Prozessmodells, **dadurch gekennzeichnet, dass** der Rechner (11) ein Merkmalsextraktormodul (13) aufweist, welches, insbesondere neben der normalen Regelung, für ein alternatives Prozessmodell mittels eines Informationsmaßes (I, JMI) aus den Eingangsdaten (x) Merkmale (f(x)) extrahiert, die für die Zielwerte (y) informativ sind.

2. Regelkreis nach Anspruch 1, **dadurch gekennzeichnet, dass** das Merkmals-extraktormodul (13) einen Merkmalsextraktor (13a) für jeden Zielwert (y) aufweist, welcher in einer Filtereinheit (13b) die Eingangsdaten (x) mittels eines Filters (f) filtert, um die Merkmale (f(x)) zu erhalten, und in einer Bewertereinheit (13c) das Informationsmaß (I, JMI) aus den Merkmalen (f(x)) und dem Zielwert (y) bildet und dessen Maximum bezüglich des Filters (f) sucht.

3. Regelkreis nach Anspruch 2, **dadurch gekennzeichnet, dass** der Merkmalsextraktor (13a) iterativ den Filter (f) sucht, für den das Informationsmaß (I, JMI) ein Maximum hat.

4. Regelkreis nach einem der vorhergehenden Ansprüche, **dadurch gekennzeichnet, dass** das Merkmalsextraktormodul (13) einen Merkmalsselektor (13d) aufweist, welcher für die Merkmale (f(x)) und Zielwerte (y) kombinierte Informationsmaße (I, JMI) bildet und deren Maximum bezüglich der Kombination sucht.

**5.** Regelkreis nach einem der vorhergehenden Ansprüche, **dadurch gekennzeichnet, dass** der Rechner (11), insbesondere ein Handlungsgeneratormodul (15), die Struktur des alternativen Prozessmodells anhand der Kombination der informativsten Merkmale (f(x)) definiert.

**6.** Regelkreis nach einem der vorhergehenden Ansprüche, **dadurch gekennzeichnet, dass** der Rechner (11) ein Handlungsgeneratormodul (15) aufweist, welches bei der normalen Regelung mittels des aktuellen Prozessmodells aus den Eingangsdaten (x) zur Annäherung an die Zielwerte (y) geeignete, zunächst noch allgemeine Aktionen ermittelt.

**7.** Regelkreis nach Anspruch 6, **dadurch gekennzeichnet, dass** der Rechner (11) ein Stellgrößenauswahlmodul (17) aufweist, welches durch Auswahl der konkreten Aktionen die Ausgangsdaten (z) definiert.

**8.** Regelkreis nach Anspruch 7, **dadurch gekennzeichnet, dass** das Stellgrößenauswahlmodul (17) mittels eines Informationsmaßes (I, JMI) die für die Zielwerte (y) effektivsten Aktionen auswählt.

**9.** Verfahren zum Erstellen eines Prozessmodells für einen Regelkreis nach einem der vorhergehenden Ansprüche, **dadurch gekennzeichnet, dass** neben, insbesondere im Hintergrund, der normalen Regelung unter Verwendung des aktuellen Prozessmodells aus den Eingangsdaten (x) des Rechners (11) für die Zielwerte (y) informative Merkmale (f(x)) mittels eines Informationsmaßes (I, JMI) extrahiert und zur Bildung eines alternativen Prozessmodells verwendet werden.

**10.** Verfahren nach Anspruch 9, **dadurch gekennzeichnet, dass** die Module (13, 15, 17) des Rechners (11) selbstorganisiert und automatisch arbeiten.

**Claims**

**1.** A control loop for regulating a combustion process in a plant (1), in particular a power-generating plant, a waste incineration plant or a cement works, having a controlled system (3) for converting material (G), while supplying air (L), by means of the combustion process, with at least one flame body (F) being formed, having at least one observation device (5) imaging the flame body (F) and having other sensors (7) for determining input data (x), and at least one adjustment device (9) that can be controlled by output data (z) for at least the supply of material (G) and/or air (L), and having also a computer (11) for evaluating the input data (x) with regard to the target values (y) and for determining the output data (z) by using a current process model, **characterized in that** the computer (11) has a feature extraction module (13) which, in particular alongside the normal regulation, extracts features (f(x)) that are informative for the target values (y) from the input data (x) by means of an information measure (I, JMI) for an alternative process model.

**2.** A control loop according to Claim 1, **characterized in that** the feature extraction module (13) has a feature extractor (13a) for each target value (y) that filters the input data (x) in a filter unit (13b) by means of a filter (f) in order to obtain the features (f(x)) and in an evaluation unit (13c) generates the information measure (I, JMI) from the features (f(x)) and the target value (y) and searches for its maximum with regard to the filter (f).

**3.** A control loop according to Claim 2, **characterized in that** the feature extraction module (13a) iteratively searches for the filter (f) for which the information measure (I, JMI) has a maximum.

**4.** A control loop according to any of the preceding claims, **characterized in that** the feature extraction module (13) has a feature selector (13d) which generates combined information measures (I, JMI) for the features (f(x)) and target values (y) and searches for the maximum of said information measures with regard to the combination.

**5.** A control loop according to any of the preceding claims, **characterized in that** the computer (11), in particular an action generator module (15), defines the structure of the alternative process model, using the combination of the most informative features (f(x)).

**6.** A control loop according to any of the preceding claims, **characterized in that** the computer (11) has an action generator module (15) which, in the course of normal regulation, uses the current process model to determine from the input data (x) suitable actions for approaching the target values (y) that are initially still general.

7. A control loop according to Claim 6, **characterized in that** the computer (11) has an adjustment variable selection module (17) which, by selecting the concrete actions, defines the output data (z).

8. A control loop according to Claim 7, **characterized in that**, by means of an information measure (I, JMI), the adjustment variable selection module (17) selects the most effective actions for the target values (y).

9. A method for preparing a process model for a control loop according to any of the preceding claims, **characterized in that**, alongside the normal regulation occuring in particular in the background, and by using the current process model, informative features (f(x)) for the target values (y) are extracted from the input data (x) of the computer (11) by means of an information measure (I, JMI) and used to generate an alternative process model.

10. A method according to Claim 9, **characterized in that** the modules (13, 15, 17) of the computer (11) are self-organized and operate automatically.

## Revendications

1. Circuit régulateur pour réguler un processus de combustion dans une installation (1), en particulier dans une centrale électrique, un incinérateur ou une cimenterie, avec une ligne (3) pour le transfert des produits (G) ayant un apport d'air (L) à travers le processus de combustion, avec la formation d'au moins un corps de flamme (F), au moins un dispositif d'observation (5) qui relève l'image du corps de flamme (F) et des senseurs (7) additionnels pour la détection des données d'entrée (x), au moins un dispositif régulateur (9) contrôlé par des données de sortie (z) pour au moins l'apport de produits (G) et/ou d'air (L), et un calculateur (11) pour l'évaluation des données d'entrée (x) par rapport à des valeurs cibles (y) et pour la détection des données de sortie (z) en utilisant un modèle de processus actuel, **caractérisé en ce que** le calculateur (11) présente un module d'extraction des caractéristiques (13), lequel, en particulier, outre le réglage normal, pour un modèle de processus alternatif au moyen d'une mesure d'information (I, JMI) et à partir des données d'entrée (x), extrait des caractéristiques (f(x)) informatives pour les valeurs cibles (y).

2. Circuit régulateur selon la revendication 1, **caractérisé en ce que** le module d'extraction des caractéristiques (13) présente un extracteur de caractéristiques (13a) pour chaque valeur cible (y), lequel, dans une unité de filtrage (13b), filtre les données d'entrée (x) au moyen d'un filtre pour obtenir les caractéristiques (f(x)), et lequel, dans une unité d'évaluation (13c), forme la mesure d'information (I; JMI) à partir des caractéristiques (f(x)) et de la valeur cible (y) et recherche le maximum de la mesure d'information par rapport au filtre (f).

3. Circuit régulateur selon la revendication 2, **caractérisé en ce que** l'extracteur de caractéristiques (13a) recherche itérativement le filtre (f) pour lequel la mesure d'information (I, JMI) atteint un maximum.

4. Circuit régulateur selon l'une quelconque des revendications précédentes, **caractérisé en ce que** le module d'extraction des caractéristiques (13) présente un sélecteur de caractéristiques (13d), lequel, pour les caractéristiques (f(x)) et les valeurs cibles (y), forme des mesures d'information combinées (I, JMI) et recherche leur maximum par rapport à la combinaison.

5. Circuit régulateur selon l'une quelconque des revendications précédentes, **caractérisé en ce que** le calculateur (11), en particulier un module générateur d'action (15), définit la structure du modèle de processus alternatif en base à la combinaison des caractéristiques les plus informatives (f(x)).

6. Circuit régulateur selon l'une quelconque des revendications précédentes, **caractérisé en ce que** le calculateur (11) présente un module générateur d'action (15), qui détermine, en réglage normal, à travers le modèle de processus actuel à partir des données d'entrée (x), des actions encore générales à ce moment-là, et appropriées pour l'approximation des valeurs cibles (y).

7. Circuit régulateur selon la revendication 6, **caractérisé en ce que** le calculateur (11) présente un module de sélection des grandeurs régulatrices (17), qui définit les données de sortie (z) à travers la sélection des actions concrètes.

8. Circuit régulateur selon la revendication 7, **caractérisé en ce que** le module de sélection des grandeurs régulatrices (17) sélectionne les actions les plus effectives pour les valeurs cibles (y) à travers une mesure d'information (I, JMI).

9. Procédé d'élaboration d'un modèle de processus pour un circuit régulateur selon l'une quelconque des revendications précédentes, **caractérisé en ce que**, en particulier dans le contexte, outre le réglage normal, on extrait des caractéristiques informatives (f(x)) en utilisant le modèle de processus actuel, à partir des données d'entrée (x) du calculateur (11) pour les valeurs cibles (y) à travers une mesure d'information (I, JMI), et celles-ci sont employées pour la formation d'un modèle de processus alternatif.

10. Procédé selon la revendication 9, **caractérisé en ce que** les modules (13, 15, 17) du calculateur (11) travaillent de manière autonome et automatique.

11

13d

13a

13b

x          y          z

Fig.1

1

5    7    7          9    9

3

13c          13d

13b

f    f(x)    I          y

$\frac{\partial I}{\partial f}$

x

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004018940 A
- EP 1621813 A1
- WO 02070953 A1
- WO 2004018940 A1
- WO 02077527 A1
- EP 1396770 A1